# EUROPEAN PATENT APPLICATION

(11) **EP 4 528 865 A1**
(43) Date of publication of application: **26.03.2025**
(21) Application number: 23198316.4
(22) Date of filing: 19.09.2023
(51) Int. Cl.: H01M 10/04, H01M 50/536, H01M 50/572

(54) **DEVICES AND METHODS FOR MANUFACTURING ELECTRICAL BATTERIES**

(71) Applicant: CUSTOMCELLS Holding GmbH, 25524 Itzehoe (DE)
(72) Inventor: Kaiser, Bernd, Itzehoe (DE)
(74) Representative: LKGLOBAL Lorenz & Kopf Patentanwalt Attorney at Law PartG mbB

(57) **Abstract**

A first aspect of this disclosure is related to a device for manufacturing a battery cell,
configured for:
- obtaining a battery cell with a tap ;
- obtaining a tap-tape from a tap-tape source ;
- applying a first part of the tap-tape on a tap of the battery cell;
- separating the first part of tap-tape from the tap-tape.

## Description

### Technical Field

In this disclosure devices and methods for manufacturing electrical batteries are described.

### Background

When welding current discharge flags ("taps") of electrodes of a battery cell to the poles of a cell sharp edges can be generated. These edges can damage the coating on an aluminum of a sheath (e.g. pouch foil) and thus might create a conductive connection to the electrolyte. The aluminum then could act a sacrificial anode, oxidize, and lose its barrier effect of the cell. To prevent this, the welding seams or points can be covered with an electrolyte-resistant adhesive tape ("tap-tape"). However, the manufacturing process of applying an adhesive tape to a cell material can be cumbersome. Improvements in this field are desirable.

### Summary

An object of the present disclosure is improvement of manufacturing of batteries.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of this disclosure is related to a device for manufacturing a battery cell,
configured for:
- obtaining a battery cell with a tap;
- obtaining a tap-tape from a tap-tape source;
- applying a first part of the tap-tape on a tap of the battery cell;
- separating the first part of tap-tape from the tap-tape.

A "cell", in the sense of this disclosure, refers to battery cell that use taps. A cell can be, e.g. a cylindrical cell, a prismatic cells, a pouch cell, a coin cell. A cell can be in a singular or in a stacked configuration. A cell can be, e.g., for a lithium-ion battery, for a lithium iron phosphate battery, for nickel-cadmium battery or for a lithium-sulfur battery.

A "tap", in the sense of this disclosure, refers to an electrical connection point that allows access to a specific voltage level within a battery pack. A tap is a physical connection to a cell, a cell group and/or a battery comprising a plurality of cells. A tap can also be referred to as "current discharge flag".

Batteries are often made up of multiple individual cells connected together in series and/or parallel configurations. Each cell has a certain voltage potential. When cells are connected in series, their voltages add up, while connecting them in parallel increases the overall capacity of the pack. Taps can be used to access an electrical potential at various points within a series-parallel arrangement of a battery. Taps can provide access to specific groups of cells within a pack. This can allow for accessing and/or monitoring one or more voltage levels of each group of cells. Using taps, a charging and/or a discharging process can be controlled. A battery management system of a battery, in particular a battery pack, can rely on taps to access and/or monitor a voltage, a state of charge, and non-electrical parameters such as a temperature of individual cells or cell groups. Taps can be used to access one or more cells and/or cell groups for diagnosing the battery. If a specific cell group is experiencing problems, tapping into that group can aid in identifying and addressing the issue during maintenance.

A "tap-tape", in the sense of this disclosure can be a tape with electrical and mechanical separation properties. A tap-tape can be used to isolate electrical connections and prevent short circuits. A tap-tape can be made from insulating materials that can withstand the electrical voltages and environmental conditions present in various applications, i.e. battery cells or cell-groups.

A tap-tape can be a general-purpose tap-tape designed specifically for electrical insulation. It can be made of vinyl, rubber, and/or other insulating materials. A tap-tape can have a specific color for color-coding purposes, e.g. to indicate right, left, front or back of a battery cell or a cell group. A tap-tape can comprise polyimide, such as Kapton tape. Polyimide has effective electrical insulation properties and/or can withstand high temperatures. A tap-tape can be made from a flexible rubbery material that is self-amalgamating, such as Mastic tape. When stretched and wrapped around a connection, it can fuse to itself, creating a water-tight and insulating barrier. Self-fusing tape can also be used as tap-tape, in particular for sealing and insulating a tap and/or a cell. A tap-tape can comprise fiberglass. Fiberglass tap-tape (as all other tap-tapes as well) can be coated with a high-temperature-resistant adhesive.

Application of adhesives of any shape is possible if they are fed on a carrier foil as tap-tape. In this case, the part of the tap-tape that is applied to the tap is the adhesive glue. Cutting to length is not necessary in this case. Then the carrier foil can be rewound after passing the location of application.

A "tap-tape source" can be a device configured for storing and/or providing tap-tape. Tap-tape can be stored in a tap-tape source piecewise. Additionally or alternatively, tap-tape can be stored in a tap-tape dispenser. A tap-tape dispenser can be a device configured to hold a roll of tap-tape and facilitate the dispensing and cutting of tap-tape in a controlled and convenient manner. A tap-tape dispenser can come in various designs, sizes, and functionalities to accommodate different types of tap-tapes and applications. A tap-tape dispenser can comprise one or more sensors that detect when and/or how much a piece of tap-tape is pulled and/or how much tap-tape is left.

A separation of the part of the first tap-tape from the first tap-tape can be done by a cutting device. Additionally and alternatively, a separation can be facilitated by pre-determined breaking points in a tap-tape.

By a device according to the first aspect an improved manufacturing of batteries as possible.

An embodiment of the first aspect is related to a device for manufacturing a battery cell,
configured for:
- applying the first part of the tap-tape upon a welding seam that connects the tap with the battery cell .

Welding seams can have sharp edges due to several factors related to the welding process and the materials being welded. During welding, the heat generated melts the base materials at the joint, forming a molten pool known as the fusion zone. As the molten material cools and solidifies, it can create irregularities and variations in the surface profile, leading to the formation of sharp edges. These sharp edges can be dangerous for the cell. The tap-tape is configured and applied to cover one or more sharp edges of a welding seam. Thereby, the tap-tape can protect the surroundings of the welding seam from being damaged by its sharp edges.

An embodiment of the first aspect is related to a device for manufacturing a battery cell,
configured for:
- applying the first part of the tap-tape on a first side of the tap ; and;
- applying a second part of a tap-tape on a second side of the tap .

A tap can be formed e.g. as a band with a small height that extends from the cell in order to provide an electrical access point. Therefore, a tap can have an upper side and a bottom side. A first part of the tap-tape can be applied to cover one side of the tap, e.g., the upper side. Additionally or alternatively, a second part of a tap-tape can be applied to cover the second side of the tap, e.g. the lower side.

If a tap has rather a prismatic form than a band-shaped form, then further parts of tap-tape can be applied to cover also the other sides of a tap. In particular the tap-tape can have a width the exceeds the widths of a tap. Then a first part and a second part of a tap-tape can be applied such that they fully comprise a tap and in particular are applied to each other on the overlapping sides. Thereby, a good isolation and protection against sharp welding edges can be achieved with a rather small amount of resources.

An embodiment of the first aspect is related to a device for manufacturing a battery cell,
configured for:
- obtaining a second tap-tape from a second tap-tape-source ;
- separating the second part of the tap tape from the second tap tape.

By using a tap-tape from a second source, a tap can be covered by different tap-tapes (a tap-tape from a first source and a tap-tape from a second source), either from one side and/or from a plurality side. In the embodiment described before, a first side of a tap can be covered by a first type of tap-tape from a first tap-tape source and a second side of the tap can be covered by a second type of tap-tape from a second source. The tap-tapes from the different sources can differ in one or more of parameters like thickness, heat resistance and/or color. In a specific embodiment, a tap-tape for an upper side of a tap is thicker as for a lower side, since the upper side is more prone to mechanical stress than the lower side.

Additionally or alternatively, two different tap-tape types (or even more) can be used if different cell types are provided to the taping device. A first cell type, e.g. with an architecture that requires a tap-tape with a small width, can be covered with a respective small tap-tape from a first tap-tape source. A second cell type, e.g. with an architecture that requires a wider tap-tape, can be covered with a respective wide tap-tape from a second tap-tape source.

A separation of a part from the second tap-tape can be done by a cutting device, as for the part of the first second tap-tape. In particular the same cutting device can be used to cut a part from the second tap-tape as from the first tap-tape. Additionally and alternatively, a separation can be facilitated by pre-determined breaking points in a tap-tape.

An embodiment of the first aspect is related to a device for manufacturing a battery cell,
comprising a dispense roller that stores one or more tap-tape sources .

A dispense roller can be designed to provide one or more tap-tapes accurately configured to be placed on a tap of a cell. A dispense roller can be designed such that applies a required tension to an applied tap-tape. In particular, the dispense roller can provide pre-determined tensions for each tap-tape the dispense roller provides. The tension can be adjusted by passive elements such as a spring and/or active elements such as a servo motor. An pre-determined tension can assure that the tap-tape is not folded when applied on the tap.

An embodiment of the first aspect is related to a device for manufacturing a battery cell,
comprising one or more pulleys configured for:
- guiding a tap tape to a place of application .

A pully (also "drum" or a "sheave") can be used to increase flexibility for placing a tap-tape source. In particular in constraint spatial environments a tap-tape source may not be placeable to directly provide a tap-tape to location of application. In this case a tap-tape can be guided over a pulley to provide the tap-tape from its source to the location of application.

Additionally or alternatively, a pully can be configured to provide one or more pre-determined tensions to a tap-tape to be applied. Since a pully can be designed smaller than a tap-tape source, such as a dispense roller, actuating a pully to exert a tension to a provided tap-tape can be more easier. As for dispense rollers, a tension can be generated by attaching one or more passive devices, such as springs, to the pulley and/or active elements, such as a servo motor. In order to provide different types of tap tapes different kinds of pulleys can be used, i.e. a device according to the first aspect can be configured to accommodate different types of tension pulleys and/or different kinds of guiding pulleys.

An embodiment of the first aspect is related to a device for manufacturing a battery cell,
configured for:
- providing a mechanical pressure to the first and/or the second part of the respective tap-tapes while being in mechanical contact with the battery cell .

A pre-defined mechanical pressure/force to a part of a tap-tape applied on a cell can be provided by dispense roller. Additionally or alternatively, a pulley that guides a tap-tape to a location of application can be designed to apply a pre-defined pressure or force to a part of an applied tap-tape. Additionally or alternatively, a cutting device, which is configured to separate a part from a tap-tape, can be configured to additionally provide a pre-defined pressure or force to an applied part of a tap-tape. In case, different types of tap-tapes are applied, a pressure can be specifically provided for the applied tap-tape type.

An embodiment of the first aspect is related to a device for manufacturing a battery cell,
comprising one or more means for guiding a tap tape to a location of application, wherein the means is configured for providing the mechanical pressure to the tap tape.

The one or more guiding means can be formed as fingers that comprise a part that receives a part of a tap-tape, e.g. a tap-tape from a tap-tape dispense roller. The part of the tap-tape is then guided by another part of the finger, e.g. on the top of the finger or within the finger, to the location of application. Thereby, the tap-tape can be aligned as required for the application of the tap-tape. Therefore, the finger can be mounted movably. This enables a precise application in particular for different cell types, tap-types and/or tap-type application types. The finger further comprises a part where the tap-tape leaves the finger to be applied on a cell.

When leaving the cell the finger can be used to apply a predetermined mechanical pressure or force to the tap-tape applied on the cell. Therefore, the finger can be mounted movable. For example, a finger can be mounted movable by providing one or more rotary degrees of freedom. A pre-defined pressure can be applied by rotating the finger, e.g. such that the part of the finger where the tap-tape leaves the finger can press the tap-tape onto the cell. Additionally or alternatively, a movement can also be provided by one or more translational degrees of freedoms, such that the finger can press the applied tap-tape to the cell with a pre-determined force. The movable mount can be configured such that different pressures/forces, e.g. for different tap-, cell-, or application types can be exerted.

The device according to the first aspect can be configured to accommodate different types of guiding means in order to guide different tap-tape types and/or provide different kind of pressure profiles to apply the tap-tape to a tap/cell.

An embodiment of the first aspect is related to a device for manufacturing a battery cell,
comprising at least two means for guiding a tap-tape to a location of application, wherein one means is configured to guide a first tap-tape, in particular from a first tap-tape-source, to a first location of application ;
and the other of the two means is configured to guide a second tap-tape, in particular from a second tap-tape-source, to a second location of application.

A plurality of guiding means or fingers can be used to apply tap-tape from different sources and/or tap-tape at different positions. For example, a plurality of taps of a single cell may have to be covered by tap-tape. Then a first finger guides a tap-tape to the first tap and controls the application pressure. This finger is located over the tap/cell and applies the tap-tape on the upper side of the tap. A second finger which is located next to the first finger applies a tap-tape on an upper side of a further tap next to the tap that is served by the first finger.

Additionally or alternatively, tap-tape might have also to be applied on the bottom side of the two taps. This can be done by two further fingers located below the taps/cell. A third finger applies tap-tape on a lower side of the tap whose upper side is served by the first finger. And a fourth finger, that can be located next to the third finger, can apply tap-tape on a bottom side of the tap whose upper side is served with tap-tape by the second finger. All fingers can be configured independently movable as described above. All fingers can be configured for different tap-tape-types, e.g. to serve different cell types. All fingers can be configured to apply different pre-defined pressures to an applied tap-tape.

An embodiment of the first aspect is related to a device for manufacturing a battery cell,
configured to:
- separating a part of a tap-tape that is applied with a pre-defined distance to an opening where the tap-tape leaves the at least one of the means for guiding the tap-tape.

The overlap can be used as a part of tap-tape that is applied to a tap on the other side of a cell (that arrives at the location of application later). Additionally or alternatively the overlap can be used as a part of tap-tape that is applied to another cell that is provided after the current cell has been served. In this way, the overlap can be configured with a stable length, e.g. by configuring a distance between a cutter and a finger.

An embodiment of the first aspect is related to a device for manufacturing a battery cell,
wherein the battery cell has a tap on a first side and a tap on a second side; and the device is configured for:
- applying a first tap-tape and/or a second tap-tape on the tap on the first side;
- applying a first tap-tape and/or a second tap-tape on the taps on both sides.

For example, a cell can have two taps on a frontside and two taps on a backside. This can be handled by configuring the tap-taping device with two fingers for each tap (to applied a tap-tape to an upper side of each tap and to a bottom side of each tap). This means the tap-taping machine would have eight fingers in total.

An embodiment of the first aspect is related to a device for manufacturing a battery cell,
wherein the battery cell has two taps arranged next to each other; and the device is configured for:
- applying a first tap-tape and/or a second tap-tape on one of the two taps;
- applying a first tap-tape and/or a second tap-tape on both taps.

Such cells can either be served by providing two fingers next to each other, as described above. Additionally or alternatively, this can be handled by moving a cell such that the same finger(s) can serve both taps. In general, a movement of the cell can be obtained by equipping the tap-taping device with a mold in which a cell can be rested. This mold can be configured movable such that the cell can be shifted back and forth and/or rotated. By such a mold, a cell can be flexibly moved such that a location of application can be actively adjusted by the mold and the one or more fingers that provide the tap-tape may be fix.

An embodiment of the first aspect is related to a device for manufacturing a battery cell,
comprising a shifting system configured to:
- providing battery cells serially to a location where a tap-tape is applied.

For example, a tap-taping device can be configured with four fingers and with a rail-system that shifts cells through the device. Then, for a cell with two taps on the front and two cells on the backside, the two taps on the front side of a cell, which enter the tap-taping device first, are served by the four fingers and tap-tape is applied on both sides of each of the frontside taps. Then the cell is pushed forward such that the taps on the backside can be served with tap-tape by the four fingers. Additionally or alternatively, a conveyor belt can be used for shifting cells forward.

For precisely controlling the location of application of tap-tape, a shifting system can comprise a mold that can hold a single cell in position while the cell is moved on the shifting system towards the location of application. Additionally or alternatively, a stop can be configured such that cells provided by a shifting system are precisely oriented for the application of a tap-tape.

The device according to the first aspect can be configured to accommodate different types of shifting systems (rail systems, molds, etc.) in order to guide or place different cell types and/or to locate the cells for different types of tap-tapes.

An embodiment of the first aspect is related to a device for manufacturing a battery cell,
wherein each of the tap-tapes applied to a tap and/or to taps of a battery cell is from an independent tap-tape source .

Based on independent sources for tap-tapes, different types of tap tape con be provided. Types of tap-tape can differ in material properties and/or properties of a form of one or more tap-tape types. To accommodate different types of tap-tape, a device according to the first aspect can be configured to accommodate different subsystems, such as molds, fingers, pulleys, etc.

A second aspect of this disclosure is related to a method for manufacturing a battery cell,
comprising the steps:
- obtain a cell with a tap ;
- obtain a first tap-tape 210) from a tap-tape source ;
- applying a part of the first tap-tape on a tap of the battery cell;
- separate the first part from the first tap-tape.

A separation of a part of a tap-tape from a provided tap-tape can be performed before or after a tap-tape is applied to a tap/cell. A cutting of the tap-tape, e.g. by a knife, can be implemented by mounting the cutting means on an excentre in order to enable the taping parallelly to a continuous feed.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a device for manufacturing a battery cell according to an embodiment of the disclosure.
Fig. 2 illustrates a taping system for a device, e.g. the device of Fig. 2, according to an embodiment of the disclosure.
In the following description reference is made to the accompanying figures which form part of the disclosure and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be individually be combined unless expressly stated otherwise.

### Detailed description

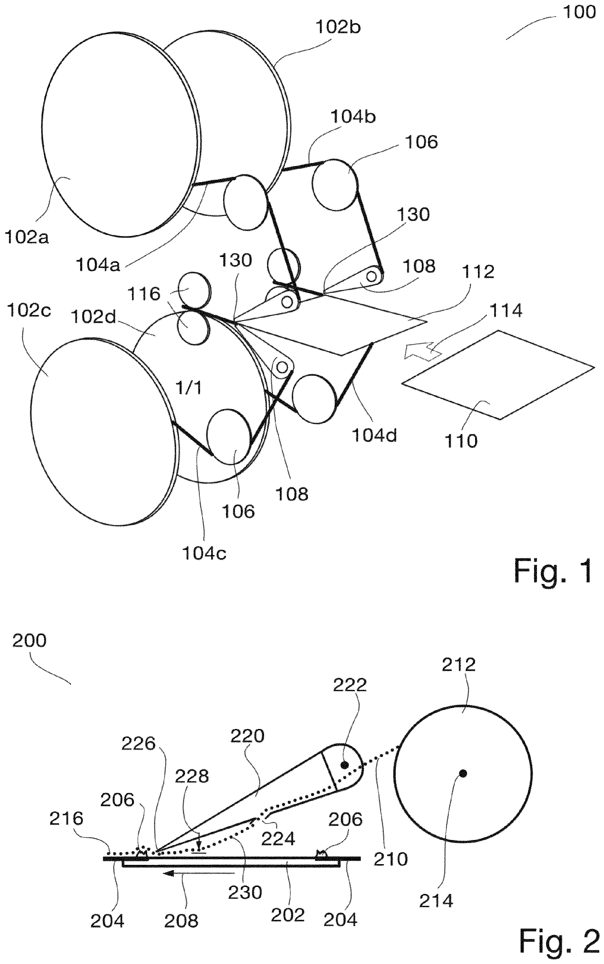

Fig. 1 illustrates a principle design 100 according to an embodiment of the disclosure.

Sharp edges can be produced when welding current discharge flags ("taps") of the electrodes of a battery cell to the poles of the final cell. These can damage the coating on the aluminum of the sheath (e.g. pouch foil) and thus create a conductive connection to the electrolyte. The aluminum acts as a sacrificial anode, oxidizes, and loses its barrier effect. To prevent this, the weld seams or points can be covered with an electrolyte-resistant adhesive tape ("tap-tape").

The embodiment 100 is configured to provide a battery cell 110 to a location of application 130 of a plurality of tap tapes. The device comprises a first tap-tape source 102a that is configured to be equipped with a first tap-tape 104a. Furthermore, the device comprises additional tap-tape sources 102b, 102c, 102d that are configured to provide second, third, and fourth tap-tapes 104b, 104c, 104d. The different tap-tape sources 102a - 102d are configured to store and provide different types of tap-tape. The kind of tap-tape type used is defined by the tap side, tap type and/or cell type that is to be covered with tap-tape.

From the different sources 102a - 102d, the tap-tapes 104a - 104d are guided over pulleys 106 towards a respective means for guiding a tap-tape 108 ("finger"). The tap-tapes 104a - 104d are guided through the fingers such that the adhesive side of the tap is oriented inwards in order to be applied to the taps. The fingers 108 are configured to guide the tape to the location of application. Furthermore, the fingers 108 are configured to provide a pressure on the tap-tape when it is applied to the cell.

The tap-tape is placed on a welding seam (not illustrated) that attaches a tap to an electrode of a cell body 110 and in order to cover sharp edges of the welding seam. The cell 110 is provided to the location of application via a rail system 112. The rail system 112 guides and positions a cell 110 in a first dimension. At the location of application 130 the movement 114 of the cell 110 is halted by the rail system. In order to position the cell 110 correctly an additional mechanical stop (not illustrated) is used that stops the cell such that the welding seam is positioned at the location of application 130 such that it can be taped.

Additionally or alternatively to a mechanical stop, a cell can be provided in a mold, such that tap-tape can be applied as defined. Via individual side and/or height adjustments and when using an indexed forming nest (mold), the device can process different cell formats without major changes by simply pushing them through. The pulleys 116 are configured to provide a tension to the tap-tapes 104a - 104d such that they can be applied simply by the pressure exerted by the fingers 108. The pulley 116 also help to cut the parts of the tap-tape 104a - 104d to be applied to the tap/cell.

The embodiment can provide advantages in cycle times per cell, in particular compared to an automated or manually-performed pick-and-place application of tap-tape. The embodiment can be used for both symmetrical cells (taps arranged opposite each other) and asymmetrical cells (taps arranged next to each other). By exchanging the pressure fingers 108 and the guide rollers 116, a use of different tap tapes, e.g. of different widths, can be facilitated.

Fig. 2 a sketches a taping system 200 for a device, e.g. the device according to Fig. 1, according to an embodiment of the disclosure. A battery cell 202 is provided to a location of application 226. The direction of movement is indicated by the arrow 208. The battery cell 202 comprises taps 204 that are welded to the battery cell. The welding process results in a welding seam 206 that has sharp edges. Therefore, the welding seam has to be covered by tap-tape 210.

The tap tape is provided by a tap-tape source 212, e.g. a roll which stores a long line of tap-tape. The roll is rotatable around the center 214. The tap-tape 210 is guided through a guiding means 220 towards the location of application 226. In the embodiment shown, the guiding means 220 has an opening 224 through which the tap-tape 210 can leave the finger 220 toward the location of application. On the location of application, the guiding means 220 presses the tap-tape 216 onto the tap/cell. Therefore, the finger is rotatably mounted in point 222.

The tap-tape 210 is tensed by a pulley system (e.g. the pulleys 216 of Fig.1) such that it can be placed without folds over the welding seam when the cell is moved by the movement 208. The guiding means comprises a cutting means 228 in order to cut the part of the tape which is to be applied to the tap/cell. The overlapping portion 230 of the tape 210 is used for taping the tap 204 located at the end of the cell 202. In order to adapt the device for different cells 202 and different taps 204, the length of the overlapping portion can be adjusted, e.g. by configuring the guiding means 220 with a movable cutting means with a movable opening 224 and/or a movable cutting means 228.

A process for taping a tap/cell can be implemented in different sequences. A positioning of the tap-tape and/or a pressing of the tap-tape to the tap/cell can be performed before or after a separation/cutting of a tap-tape (to be) applied.

### List of Reference Signs

- 100: device for manufacturing battery cell
- 102a: first tap tape source
- 102b: second tap tape source
- 102c: third tap tape source
- 102d: fourth tap tape source
- 104a: first tap tape
- 104b: second tap tape
- 104c: third tap tape
- 104d: fourth tap tape
- 106: pulley
- 108: finger
- 110: battery cell
- 112: rail system
- 114: direction of movement of cell
- 116: pulley
- 130: location of application
- 200: device for tap taping
- 202: battery cell
- 204: electrode with tap
- 206: welding seam
- 208: direction of cell movement
- 210: tap tape
- 212: tap tape source
- 214: rotation point
- 216: applied tap tape
- 220: guiding means
- 222: rotation point
- 224: opening
- 226: location of application
- 228: cutting means
- 230: overlapping portion of tap tape

## Claims

1. A device (100) for manufacturing a battery cell,
configured for:
- obtaining a battery cell (202) with a tap (204);
- obtaining a tap-tape (210) from a tap-tape source (102a - 102d);
- applying a first part of the tap-tape on a tap of the battery cell;
- separating the first part of tap-tape from the tap-tape.

2. The device according to claim 1,
configured for:
- applying the first part of the tap-tape (210) upon a welding seam (206) that connects the tap (204) with the battery cell (202).

3. The device according to one of the preceding claims,
configured for:
- applying the first part of the tap-tape on a first side of the tap (204); and;
- applying a second part of a tap-tape on a second side of the tap (204).

4. The device according to the preceding claim,
configured for:
- obtaining a second tap-tape (104b) from a second tap-tape-source (102b);
- separating the second part of the tap tape from the second tap tape.

5. The device according to one of the preceding claims,
comprising a dispense roller that stores one or more tap-tape sources (102a).

6. The device according to one of the preceding claims,
comprising one or more pulleys configured for:
- guiding a tap tape to a place of application (226).

7. The device according to one of the preceding claims,
configured for:
- providing a mechanical pressure to the first and/or the second part of the respective tap-tapes (210) while being in mechanical contact with the battery cell (202).

8. The device according to the preceding claim,
comprising one or more means for guiding a tap tape to a location of application, wherein the means is configured for providing the mechanical pressure to the tap tape.

9. The device according to the preceding claim,
comprising at least two means (220) for guiding a tap-tape (210) to a location of application,
wherein one means is configured to guide a first tap-tape, in particular from a first tap-tape-source, to a first location of application (226);
and the other of the two means is configured to guide a second tap-tape, in particular from a second tap-tape-source, to a second location of application.

10. The device according to one of the preceding three claims,
configured to:
- separating a part of a tap-tape that is applied with a pre-defined distance to an opening (224) where the tap-tape (210) leaves the at least one of the means (220) for guiding the tap-tape.

11. The device according to one of the preceding claims,
wherein the battery cell has a tap on a first side and a tap on a second side; and the device is configured for:
- applying a first tap-tape and/or a second tap-tape on the tap on the first side;
- applying a first tap-tape and/or a second tap-tape on the taps on both sides.

12. The device according to one of the preceding claims,
wherein the battery cell has two taps arranged next to each other; and the device is configured for:
- applying a first tap-tape and/or a second tap-tape on one of the two taps;
- applying a first tap-tape and/or a second tap-tape on both taps.

13. The device according to one of the preceding claims,
comprising a shifting system (112) configured to:
- providing battery cells (110) serially to a location where a tap-tape (104a - 104d) is applied.

14. The device according to one of the preceding two claims,
wherein each of the tap-tapes (104a - 104d) applied to a tap and/or to taps of a battery cell is from an independent tap-tape source (102a - 102d).

15. A method for manufacturing a battery cell,
comprising the steps:
- obtain a cell (202) with a tap (204);
- obtain a first tap-tape 210) from a tap-tape source (212);
- applying a part of the first tap-tape on a tap of the battery cell;
- separate the first part from the first tap-tape.
